# EUROPEAN PATENT APPLICATION

(11) **EP 2 720 476 A1**
(43) Date of publication of application: **16.04.2014**
(21) Application number: 13187667.4
(22) Date of filing: 08.10.2013
(51) Int. Cl.: H04R 1/10, H01R 24/58, H04M 1/60, H04M 1/725, H04R 5/04, H04R 1/08

(54) **Apparatus and method for detecting insertion of headset into mobile station**

(30) Priority: 08.10.2012 KR 20120111327
(71) Applicant: Samsung Electronics Co., Ltd, Gyeonggi-do 443-742 (KR)
(72) Inventor: Im, Jong-hyeok, 443-742 Gyeonggi-do (KR); Jeong, Jae-Cheon, 443-742 Gyeonggi-do (KR)
(74) Representative: Jenkins, Richard Gavin

(57) **Abstract**

Disclosed are a mobile station capable of detecting an insertion of an headset without a separate detection pin and removing noise generated when the headset is separated and a method of detecting an insertion of an headset by a mobile station. An apparatus for detecting an insertion of an headset into a mobile station includes an headset attachment/detachment detecting circuit unit for transmitting an insertion signal or a separation signal to a controller by using a resistance value of the headset attached/detached to/from the mobile station; and a controller for, when an headset separation signal is received from the headset attachment/detachment detecting circuit unit, controlling such that an output of noise to the headset, which is not completely separated from the mobile station, is blocked by turning off a microphone bias.

## Description

### BACKGROUND OF THE INVENTION

### Field of the Invention

The present disclosure relates generally to an apparatus and a method for detecting an insertion of a headset into a mobile station, and more particularly, to a mobile station capable of detecting an insertion of a headset without a separate detection pin and removing noise generated when the headset is separated from the mobile station.

### Description of the Related Art

By Virtual Tour (VT) it is normally intended to refer to a mode that enables a user A headset used for hands-free phone communication in a mobile station includes an earphone speaker and an earphone microphone.

When a plug of the headset is connected to an ear jack of the mobile station, a user uses the headset instead of the microphone and the speaker built-in the mobile station to listen to an audio signal or input an audio signal to the mobile station.

An insertion of the headset into the mobile station should be first detected to use the headset in the mobile station.

In order to detect an insertion of the headset, the ear jack of the mobile station should include a separate detection pin for detecting an insertion of a plug of the headset as well as mobile stations (MIC, Left SPK, Right SPK, and GNC) related to the headset.

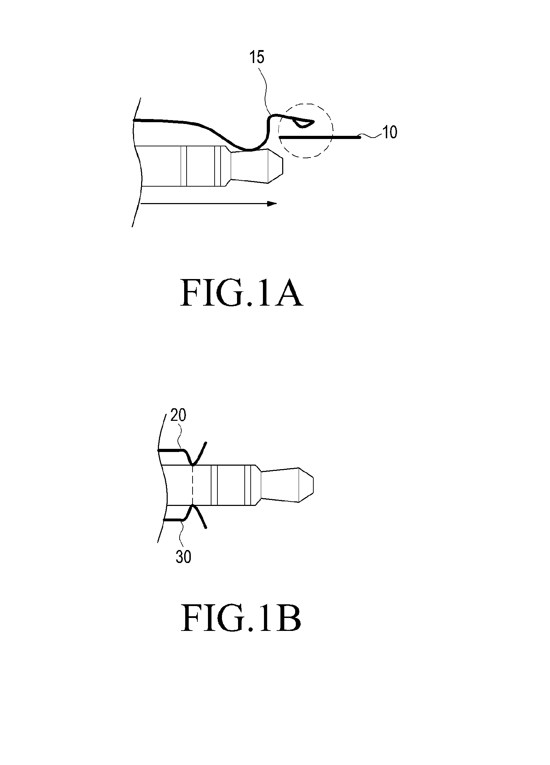

For example, in a contact type as illustrated in FIG. 1A, in a state where the headset is not inserted into the ear jack of the mobile station and thus a spring 15 and a detection pin 10 are closed, when a plug of the headset is inserted into the ear jack of the mobile station while the detection pin 10 outputs a high signal and thus the state is changed to a state where the spring 15 and the detection pin 10 are open, the detection pin 10 outputs a low signal, thereby indicating the insertion of the headset.

Alternatively, in a sliding type as illustrated in FIG. 1B, in a state where the headset is not inserted into the ear jack of the mobile station, when the plug of the headset is inserted into the ear jack of the mobile station while a detection pin 20 outputs the high signal, the detection pin 20 outputs the low signal as the detection pin 20 and a ground pin 30 are electrically connected through the plug of the headset, thereby indicating the insertion of the headset.

However, in the contact type as illustrated in FIG. 1A, even when the headset is separated from the mobile station due to a foreign material between the spring 15 and the detection pin 10 in the state where the spring 15 and the detection pin 10 are open, it is recognized that the headset is continuously being inserted.

Further, in the sliding type as illustrated in FIG. 1B, when the headset is separated from the mobile station, popup noise is generated due to a microphone bias (MIC BIAS) while the plug of the headset sweeps mobile stations of the ear jack.

In addition, as described above, installation of a separate detection pin in the ear jack of the mobile station makes a structure of the ear jack complex and increases costs regardless of a function of the headset.

### SUMMARY OF THE INVENTION

To address the above-discussed deficiencies, embodiments of the present disclosure provide an apparatus and a method for detecting an insertion of a headset in a mobile station which can detect the insertion of the headset by the mobile station without a separate detection pin.

Certain embodiments of the present disclosure include an apparatus and a method for detecting an insertion of a headset in a mobile station which can generate popup noise when the headset is separated from the mobile station.

Certain embodiments of the present disclosure include an apparatus for detecting an insertion of a headset into a mobile station. The apparatus includes a headset attachment/detachment detecting circuit unit for transmitting an insertion signal or a separation signal of the headset to a controller by using a resistance value of the headset attached/detached to/from the mobile station; and a controller for controlling such that an output of noise to the headset, which is not completely separated from the mobile station, is blocked by turning off a microphone bias when the separation signal of the headset is received from the headset attachment/detachment detecting circuit unit.

Certain embodiments of the present disclosure include an apparatus for detecting an insertion of a headset into a mobile station. The apparatus includes a headset insertion detecting circuit unit for transmitting an insertion signal of the headset to a controller by using a resistance value of the headset inserted into the mobile station; a headset separation detecting circuit unit for transmitting a separation signal of the headset to the controller when a voltage of a microphone bias in the mobile station is equal to or larger than a threshold; and a controller for controlling such that an output of noise to the headset, which is not completely separated from the mobile station, is blocked by turning off the microphone bias when the separation signal of the headset is received from the headset separation detecting circuit unit.

Certain embodiments of the present disclosure include a method of detecting an insertion of a headset into a mobile station. The method includes detecting an insertion signal or a separation signal of the headset by using a resistance value of the headset inserted into the mobile station; and blocking an output of noise to the headset, which is not completely separated from the mobile station, by turning off a microphone bias when the separation signal of the headset is detected.

Certain embodiments of the present disclosure include a method of detecting an insertion of a headset into a mobile station. The method includes, when an insertion signal of the headset is detected by using a resistance value of the headset inserted into the mobile station, connecting a codec and the headset; and when a separation signal of the headset is detected by using a voltage of a microphone bias in the mobile station, blocking an output of noise to the headset, which is not completely separated from the mobile station, by turning off the microphone bias.

Accordingly, the present disclosure provides an apparatus and a method for detecting an insertion of an headset into a mobile station, which have an effect of simplifying a structure for detecting the insertion of the headset by detecting the insertion of the headset without a separate detection pin and solving a problem in a cost increase. Further, there is an effect of removing popup noise generated by a microphone bias (MIC BIAS) when the headset inserted into the mobile station is separated from the mobile station.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGS. 1A and 1B illustrate an operation of detecting a headset inserted into a mobile station by using a separate detection pin;
FIG. 2 illustrates a configuration diagram of a mobile station for detecting attachment/detachment of an headset according to a embodiments of the present disclosure;
FIG. 3 illustrates a process of detecting attachment/detachment of the headset to/from the mobile station according to embodiments of the present disclosure;
FIG. 4 illustrates a configuration diagram of a mobile station for detecting attachment/detachment of an headset according to embodiments of the present disclosure; and
FIG. 5 illustrates a process of detecting attachment/detachment of the headset to/from the mobile station according to embodiments of the present disclosure.

### DETAILED DESCRIPTION OF THE EXEMPLARY EMBODIMENTS

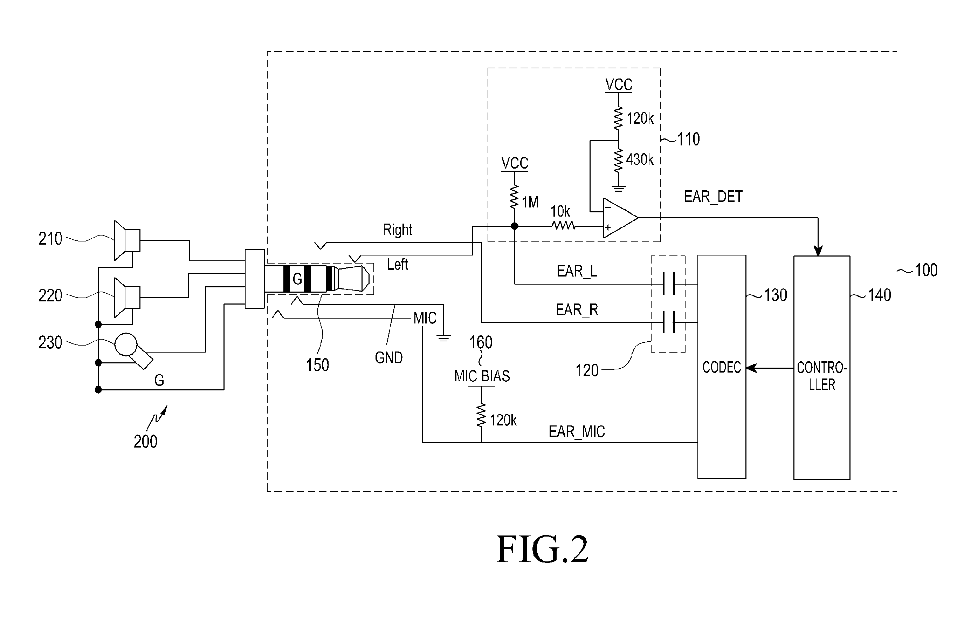

FIGURES 2 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged mobile communication device. Hereinafter, various embodiments of the present disclosure will be described with reference to the accompanying drawings. In the following description, the same elements will be designated by the same reference numerals although they are shown in different drawings.

A mobile station according to an embodiment of the present disclosure can be any of: a portable mobile station and a fixed mobile station. Here, the portable mobile station is a movable electronic device which can be easily carried, and can be a video telephone, a mobile phone, a smart phone, an International Mobile Telecommunication 2000 (IMT-2000) terminal, a WCDMA terminal, a Universal Mobile Telecommunication Service (UMTS) terminal, a Personal Digital Assistant (PDA), a Portable Multimedia Player (PMP), a Digital Multimedia Broadcasting (DMB) terminal, an E-book, a portable computer (a notebook, a tablet and the like), a digital camera or the like. Further, the fixed mobile station can be a desktop personal computer or the like.

FIG. 2 illustrates a mobile station 100 for detecting attachment/detachment of a headset according to embodiments of the present disclosure, and discloses a configuration of a mobile station having a direct current (DC) block capacitor for blocking a DC voltage output from a codec.

Referring to FIG. 2, the mobile station 100 includes an ear jack 150 into which a plug of an headset 200 is inserted, an headset attachment/detachment detecting circuit unit 110, a DC block capacitor 120, a codec 130, and a controller 140.

The ear jack 150 includes a microphone (MIC) terminal, a ground (GND) terminal, a right earphone speaker (Right) terminal, and a left earphone speaker (Left) terminal, and each of the terminals is electrically connected to the microphone (M) connector, the ground (G) connector, the right earphone speaker (R) connector, and the left earphone speaker (L) connector built-in to the plug of the headset 200 inserted into the ear jack 150, respectively.

The headset attachment/detachment detecting circuit unit 110 transmits an insertion signal or a separation signal of the headset 200 to the controller 140 by using a resistance value of the headset 200 attached to or detached from the ear jack 150.

When the headset 200 plug is inserted into the ear jack 150, a first voltage corresponding to the separation signal of the headset is changed to a second voltage by the resistance value of the headset received from the headset 200, and the headset attachment/detachment detecting circuit unit 110 transmits the insertion signal of the headset corresponding to the second voltage to the controller 140.

The headset attachment/detachment detecting circuit unit 110 includes reference voltages and a comparator, and transmits the separation signal (high signal) corresponding to the first voltage which is the reference voltage to the controller 140 when the headset 200 plug is not inserted into the ear jack 150.

When the plug of the headset 200 is inserted into the ear jack 150 while the headset attachment/detachment detecting circuit unit 110 transmits the separation signal (high signal) to the controller 140, the first voltage, which is the reference voltage, is changed to the second voltage by an internal resistance value (for example, about 16Ω to 32Ω) of a receiver within the headset, that is, by an input voltage. Accordingly, the headset attachment/detachment detecting circuit unit 110 transmits the insertion signal (low signal (EAR_DET)) corresponding to the second voltage to the controller 140.

The headset attachment/detachment detecting circuit unit 110 can receive the resistance value of the headset 200 from a connector first inserted into the ear jack 150 among connectors built-into the plug of the headset 200, and the connector first inserted into the ear jack 150 among the connectors built-in to the plug of the headset 200 is the left earphone speaker (L) connector according to embodiments of the present disclosure.

Further, when the headset 200 plug is separated from the ear jack 150 while the headset attachment/detachment detecting circuit unit 110 transmits the insertion signal (low signal) to the controller 140(that is, when separation of the left ear speaker (L) connector, which is first inserted into the ear jack 150 among the connectors built-into the plug of the headset 200 is detected), the resistance value is not received from the headset 200. Accordingly, the second voltage corresponding to the insertion signal (low signal) of the headset 200 is changed to the first voltage corresponding to the reference voltage in the headset attachment/detachment detecting circuit unit 110, and the separation signal (high signal) corresponding to the first voltage of the headset is transmitted to the controller 140.

The direct current (DC) block capacitor 120 blocks a DC voltage output from the codec 130.

The codec 130 transmits an audio signal to the left earphone speaker 210 and the right earphone speaker 220 built-in to the headset 200 through the plug of the headset 200 inserted into the ear jack 150, and receives an audio signal input to the earphone microphone 230 built-in to the headset 200 controlled by the controller 140.

When the insertion signal (low signal) of the headset is received from the headset attachment/detachment circuit unit 110, the controller 140 controls such that the audio signal output from the codec 130 is transmitted to the earphone speakers (210 and 220) of the headset 200 and the audio signal (EAR_MIC) received from the earphone microphone 230 of the headset 200 is transmitted to the codec 130.

Further, when the separation signal (high signal) of the headset 200 is received from the headset attachment/detachment detecting circuit unit 110, the controller 140 blocks the power supply to the microphone (MIC) terminal of the ear jack 150 by turning off the microphone bias 160. Accordingly, even though the plug of the headset 200 is separated from the ear jack 150 while sweeping the microphone (MIC) terminal of the ear jack 150 to which power is not supplied, popup noise generated by the microphone bias 160 is not transmitted to the earphone speakers (210 and 220) of the headset 200.

The controller 140 can turn on the microphone bias 160 after, for example, a predetermined time during which the headset 200 can be completely separated from the ear jack 150.

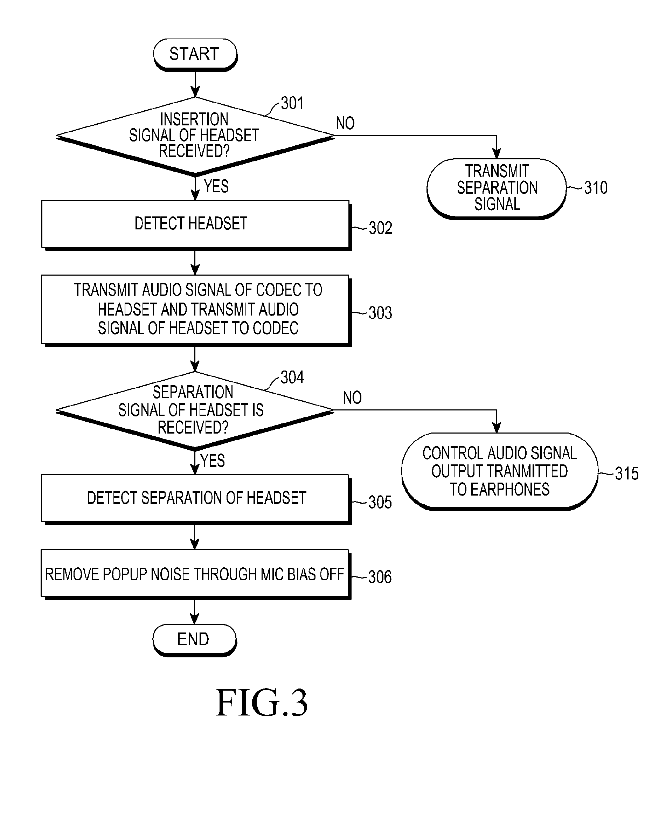

A process of detecting attached to or detached from of the headset the mobile station configured as illustrated in FIG. 2 without a separate detection pin and removing popup noise generated by the microphone bias 160 when the headset 200 is separated will be described through FIG. 3.

FIG. 3 illustrates a process of detecting the headset's 200 attachment to or detachment from the mobile station according to embodiments of the present disclosure.

Referring to FIG. 3, when the headset 200 is not inserted into the ear jack 150 of the mobile station 100, the headset attachment/detachment detecting circuit unit 110 transmits the separation signal (high signal) of the headset 200 corresponding to the first voltage which is the reference voltage, that is, a signal herein indicating to the controller 140 that the headset 200 is not inserted.

In step 310, when the headset 200 is inserted into the ear jack 150 in a state where the controller 140 having received the separation signal (high signal) of the headset detects that the headset is not inserted, if the resistance value of the headset is received through the connector (left earphone speaker (L) connector) first inserted among the connectors of the headset 200, the first voltage corresponding to the detachment signal (high signal) is changed to the second voltage according to the received resistance value in the headset attachment/detachment detecting circuit unit 110, and the insertion signal (low signal) of the headset corresponding to the second voltage is transmitted to the controller 140.

When the insertion signal (low signal) of the headset is received from the headset attachment/detachment detecting circuit unit 110, the controller 140 detects the reception of the insertion signal in step 301 and performs step 302 of detecting the insertion of the headset into the ear jack 150 of the mobile station 100.

The controller 110 having detected the insertion of the headset 200 performs step 303 of controlling such that audio signals (EAR_L and EAR_R) output from the codec 130 are transmitted to the left earphone speaker 210 and the right earphone speaker 220 of the headset 200, and the audio signal received from the earphone microphone 230 of the headset 200 is transmitted to the codec 130.

In step 315, when the audio signal is output through the headset 200 inserted into the mobile station 100 and the plug of the headset 200 inserted into the ear jack 150 is separated while the audio signal is received, that is, when the connector (left earphone speaker (L) connector) first inserted into the ear jack 150 among the connectors built-into the plug of the headset 200 is separated, the resistance value is not received any more from the headset 200, so that the second voltage is changed to the first voltage corresponding to the reference voltage in the headset attachment/detachment detecting circuit unit 110, and the separation signal (high signal) of the headset corresponding to the first voltage is transmitted to the controller 140.

When the separation signal (high signal) of the headset is received from the headset attachment/detachment detecting circuit unit 110, the controller 140 detects the reception of the separation signal in step 304 and performs step 305 of detecting the separation of the headset 200 from the ear jack 150 of the mobile station 100.

The controller 140 having detected the separation of the headset performs step 306 in which popup noise generated by the microphone bias 160 is not transmitted to the earphone speakers 210 and 220 of the headset 200 even though the plug of the headset 200 is separated while sweeping the microphone (MIC) terminal of the ear jack 150 to which power is not supplied, by turning off the microphone bias (MIC BIAS) 160 to block the power supply to the microphone (MIC) terminal of the ear jack 150.

Further, the controller 140 turns on the turned off microphone bias 160 (MIC BIAS) after a predetermined time (for example, a predetermined time during which the headset 200 is completely separated from the ear jack 150).

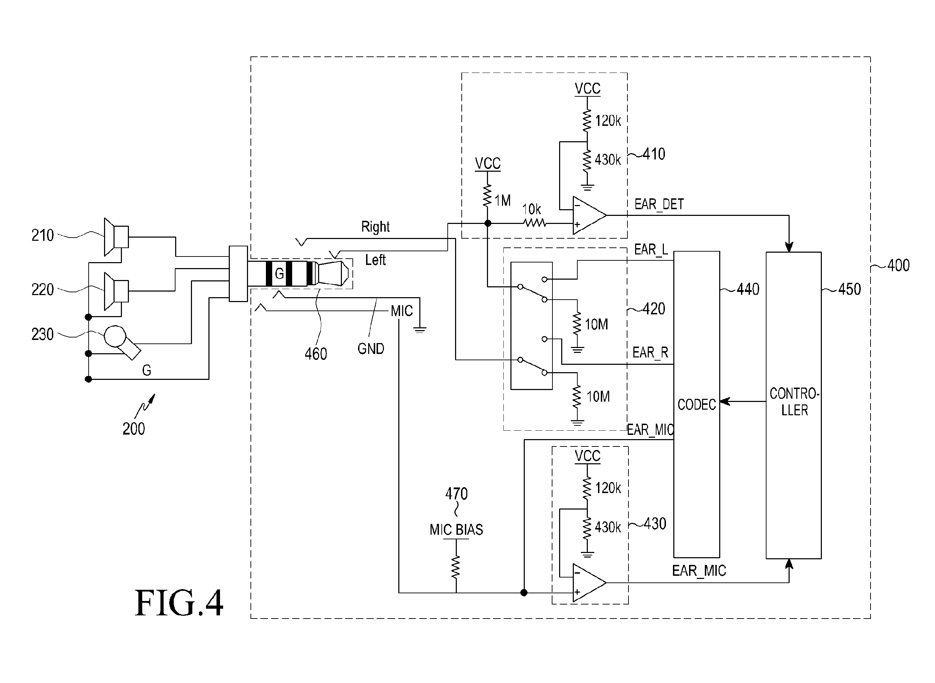

FIG. 4 is a configuration diagram of a mobile station for detecting attachment/detachment of a headset according to a second embodiment of the present disclosure. FIG. 4 illustrates a configuration of a mobile station 400 which does not include a DC block capacitor for blocking a DC voltage output from a codec.

Referring to FIG. 4, the mobile station 400 includes an ear jack 460 into which the plug of the headset 200 is inserted, a headset insertion detecting circuit unit 410, an audio pass switching circuit unit 420, a headset separation detecting circuit unit 430, a codec 440, and a controller 450.

The ear jack 460 includes a microphone (MIC) terminal, a ground (GND) terminal, a right earphone speaker (Right) terminal, and a left earphone speaker (Left) terminal, and each of the terminals is electrically connected to the microphone connector (M), the ground connector (G), the right earphone speaker connector (R), and the left earphone speaker connector (L) built-in to the plug of the ear microphone 200 inserted into the ear jack 460, respectively.

The headset insertion detecting circuit unit 410 transmits the insertion signal (low signal (EAR_DET)) of the headset 200 to the controller 450 by using the resistance value of the headset 200 inserted into the ear jack 460.

The headset insertion detecting circuit unit 410 includes reference voltages and a comparator, and transmits the separation signal (high signal) corresponding to the first voltage which is the reference voltage, that is, a signal herein indicating to the controller 450 that the headset 200 is not inserted, before the plug of the headset 200 is inserted into the ear jack 460.

When the plug of the headset 200 is inserted into the ear jack 460, while the headset insertion detecting circuit unit 410 transmits the separation signal (high signal) indicating that the headset is not inserted to the controller 450, the first voltage corresponding to the separation signal (high signal) of the headset is changed to the second voltage by the resistance value (for example, about 16Ω to 32Ω) of the headset received from the headset 200 in the headset insertion detecting circuit unit 410, and the insertion signal (low signal (EAR_DET)) of the headset corresponding to the second voltage is transmitted to the controller 450.

The headset insertion detecting circuit unit 410 can receive the resistance value of the headset from the connector first inserted into the ear jack 460 among the connectors built-in to the plug of the headset 200, and the connector first inserted into the ear jack 460 among the connectors built-in to the plug of the headset 200 is the left earphone speaker (L) connector in certain embodiments of the present disclosure.

The mobile station 400, which does not include the DC block capacitor 120, includes the audio pass switching circuit unit 420 between the codec 440 and the ear jack 460.

The audio pass switching circuit unit 420 includes two switching units for connection or disconnection between the codec 440 and the ear jack 440.

When the headset 200 is not inserted into the ear jack 460, the two switching units in the audio pass switching circuit unit 420 are switched to the ground (GND), and thus cannot output the audio signal output from the codec 440. However, when the headset 200 is inserted into the ear jack 460, the two switching units are switched to the terminals of the codec 440 outputting the audio signal EAR_R and outputting the audio signal EAR_L , respectively, so that the audio signals output to the codec 440 are transmitted from the left earphone speaker 210 and the right earphone speaker 220 of the headset 200.

Accordingly, when an audio pass connection signal is received from the controller 450, the audio pass switching circuit unit 420 controls the two switching units included in the audio pass switching units 420 to connect the codec 440 and the headset 200, so that audio signals output from the codec 440 are transmitted to the left earphone speaker 210 and the right earphone speaker 220 of the headset 200.

Further, when an audio pass disconnection signal is received from the controller 450, the audio pass switching circuit unit 420 controls the two switching units included in the audio pass switching circuit unit 420 to release the connection between the codec 440 and the headset 200.

Since the audio signal between the codec 440 and the ear jack 460 is separated in the audio pass switching circuit unit 420 before the headset 200 is inserted into the ear jack 460, the headset insertion detecting circuit unit 410 normally operates, and thus outputs the separation signal (high signal) indicating that the headset 200 is not inserted into the ear jack 460 or the insertion signal (low signal) indicating that the headset 200 is inserted into the ear jack 460 to the controller 450.

However, since the audio pass is connected in the audio pass circuit unit 420 when the headset 200 is inserted into the ear jack 460, a mixed DC voltage is transmitted from the codec 440 to the headset insertion detecting circuit unit 410, and accordingly the headset insertion detecting circuit unit 410 may malfunction. Accordingly, when the headset 200 is separated from the ear jack 460, the headset insertion detecting circuit unit 410 cannot normally operate, so that a separate headset separation detecting circuit unit capable of detecting the separation of the headset 200 from the ear jack 460 is required.

The headset separation detecting circuit unit 430 detects a voltage output from the microphone bias (MIC BIAS) 470 of the mobile station 400. When the voltage output from the microphone bias (MIC BIAS) 470 becomes equal to or larger than a threshold, the headset separation detecting circuit unit 430 transmits the separation signal of the headset to the controller 450.

The microphone bias (MIC BIAS) 470 supplies the voltage to the microphone (MIC) terminal of the ear jack 460 in order to output the audio signal (EAR_MIC) from the microphone 230 of the headset 200 connected to the microphone (MIC) terminal of the ear jack 460.

The microphone bias (MIC BIAS) 470 outputs a predetermined voltage before the headset 200 is inserted into the ear jack 460. However, when the headset 200 is inserted into the ear jack 460, that is, when the microphone connector (M) among the connectors built-in to the plug of the headset 200 is inserted, the predetermined voltage of the microphone bias (MIC BIAS) drops to a value smaller than a threshold. Further, when the headset 200 having been inserted into the ear jack 460 is separated, that is, when the microphone connector (M) among the connectors built-in to the plug of the headset 200 is separated, the voltage of the microphone bias 470 increases to a value equal to or larger than a threshold.

Accordingly, when the predetermined voltage output from the microphone bias (MIC BIAS) 470 drops to a value smaller than a threshold and then increases to a value equal to or larger than the threshold, the headset separation detecting circuit unit 430 transmits the separation signal (EAR_DET) of the headset to the controller 450.

When the codec 440 and the ear jack 460 are connected through the audio pass switching circuit unit 420, the codec 440 transmits the audio signal to the left earphone speaker 210 and the right earphone speaker 220 of the headset 200 and also receives the audio signal (EAR_MIC) input to the earphone microphone 230 installed in the headset 200 under a control of the controller 450.

When the insertion signal (low signal (EAR_DET)) of the headset is received from the headset insertion detecting circuit unit 410, the controller 450 transmits an audio pass connection signal to the audio pass switching circuit unit 420, and transmits audio signals (EAR_L and EAR_R) output from the codec 440 to the earphone speakers (210 and 220) of the headset 200 as the audio pass switching circuit unit 420 connects the codec 440 and the ear jack 460 connected to the headset 200. Further, through the microphone (MIC) terminal of the ear jack 460 having received power by the microphone bias 470, the audio signal (EAR_MIC) received from the earphone microphone (M) of the headset 200 is transmitted to the codec 400.

In addition, when the separation signal (EAR_DET) of the headset is received from the headset separation detecting circuit unit 430, the controller 450 turns off the microphone bias 470 and blocks power supply to the microphone (MIC) terminal of the ear jack 460. Accordingly, even though the plug of the headset 200 is separated from the ear jack 460 while sweeping an inside of the ear jack 460 in which microphone (MIC) terminal power is not supplied, noise is not output to the ear speaker connectors (L and R) of the headset 200.

Moreover, the controller 450 turns on the turned off microphone bias (MIC BIAS) after, for example, a predetermined time during which the headset 200 can be completely separated from the ear jack 460.

Furthermore, when the separation signal (EAR_DET) of the headset is received from the headset separation detecting circuit unit 430, the controller 450 transmits an audio pass disconnection signal to the audio pass switching circuit unit 420, and thus controls the two switching units in the audio pass switching circuit unit 420 to release connection between the codec 440 and the ear jack 460.

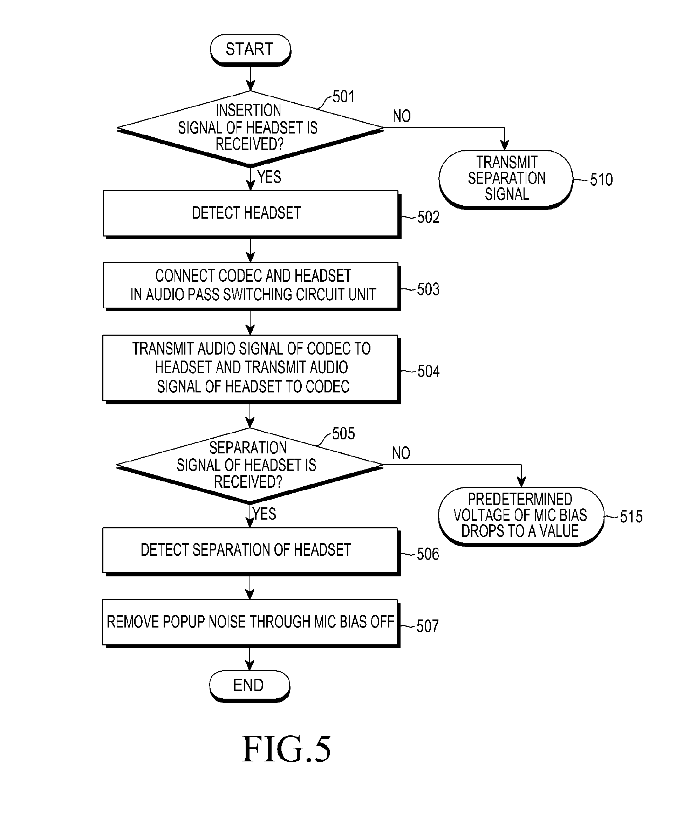

A process of detecting attachment to and detachment from of the headset and the mobile station configured as illustrated in FIG. 4 without a separate detection pin and removing popup noise generated when the headset 200 is separated will be described through FIG. 5.

FIG. 5 illustrates a process of detecting the headset's attachment to and detachment from the mobile station according to a certain embodiments of the present disclosure.

Referring to FIG. 5, when the headset 200 is not inserted into the ear jack 460 of the mobile station 400, the headset insertion detecting circuit unit 410 transmits the separation signal (high signal) of the headset corresponding to the first voltage which is the reference voltage, that is, herein a signal informing that the headset 200 is not inserted into the ear jack 460 to the controller 450.

In step 510, when the headset 200 is inserted into the ear jack 460 in a state where the controller 450 having received the detachment signal (high signal) as the signal informing that the headset 200 is not inserted into the ear jack 460 detects that the headset 200 is not inserted, if the resistance value of the headset is received through the connector (left earphone speaker (L) connector) first inserted among the connectors of the headset 200, the first voltage corresponding to the separation signal (high signal) is changed to the second voltage according to the received resistance value in the headset insertion detecting circuit unit 410, and the insertion signal (low signal (EAR_DET) of the headset corresponding to the second voltage to is transmitted the controller 450.

When the insertion signal (low signal) of the headset 200 is received from the headset insertion detecting circuit unit 410, the controller 450 detects the reception of the insertion signal in step 501, and performs step 502 of detecting the insertion of the headset into the ear jack 460 of the mobile station 400.

The controller 450 having detected the insertion of the headset 200 transmits the audio pass connection signal to the audio pass switching circuit unit 420, and performs step 503 of controlling such that the codec 400 is connected to the ear jack 460 into which the plug of the headset 200 is inserted, through the two switching units in the audio pass switching circuit unit 420.

Further, the controller 450 transmits the audio signals (EAR_L and EAR_R) output from the codec 440 to the left earphone speaker 210 and the right earphone speaker 220 of the headset 200, and also performs step 504 of controlling such that the audio signal (EAR_MIC) received from the ear microphone (M) of the headset 200 is transmitted to the codec 440.

In addition, in step 515, when the microphone (M) connector built-in to the plug of the headset 200 is inserted while the plug of the headset 200 is inserted into the ear jack 460, the predetermined voltage of the microphone bias 470 drops to a value smaller than a threshold.

When the audio signal is output through the headset 200 inserted into the mobile station 400 and the plug of the headset 200 inserted into the ear jack 460 is separated while the audio signal is received, that is, when the microphone connector (MIC) among the terminals connectors built-in to the plug of the headset 200 is separated, the voltage of the microphone bias 470 (MIC BIAS), which has dropped to the value smaller than the threshold due to the insertion of the headset 200, increases to a value equal to or larger than a threshold. Accordingly, the headset separation detecting circuit unit 430 detects the increase of the voltage, and transmits the separation signal (EAR_DET) of the headset to the controller 450.

When the separation signal (EAR_DET) of the headset is received from the headset separation detecting circuit unit 430, the controller 450 detects the reception of the separation signal in step 505, and performs step 506 of detecting the separation of the headset 200 from the ear jack 460 of the mobile station 400.

Even though the plug of the headset 200 sweeps the inside of the ear jack 150 and then is separated from the ear jack 150 in which power is not supplied to the microphone (MIC) terminal by first turning off the microphone bias 470 and blocking the power supply to the microphone (MIC) terminal of the ear jack 460, the controller 450 having detected the separation of the headset performs step 507 in which noise is not output to the earphone speaker connectors (L and R) of the headset 200 plug. The controller 450 turns on the turned off microphone bias (MIC BIAS) 470 after, for example, a predetermined time during which the headset 200 can be completely separated from the ear jack 460.

Further, as the controller 450 transmits the audio pass disconnection signal to the audio pass switching circuit unit 420 in step 507, the audio pass switching circuit unit 420 controls the two switching units to release the connection between the codec 440 and the ear jack 460.

The apparatus and the method for detecting the insertion of the headset into the mobile station according to the present disclosure can be implemented by a computer-readable code in a computer-readable recording medium. The computer-readable recording medium includes all types of recording apparatuses storing data read by a computer system. Examples of the recording medium include a ROM, a RAM, an optical disk, a magnetic tape, a floppy disk, a hard disk, a non-volatile memory and the like, and also can be implemented in a carrier wave type (for example, transmission through an Internet). Further, the computer-readable recording medium is dispersed to the computer system connecting thereto through a network, and can store and execute a computer readable code in a dispersion method.

Although the present disclosure has been described with example, various changes and modifications may be suggested to one skilled in the art. It is intended that the present disclosure encompass such changes and modifications as fall within the scope of the appended claims.

## Claims

1. An apparatus configured to detect an insertion of an headset(200) into a mobile station(100), the apparatus comprising an headset attachment/detachment detecting circuit unit and a controller, wherein:
the headset attachment/detachment detecting circuit unit(1100 is configured to transmit an insertion signal or a separation signal of the headset to the controller (140) by using a resistance value of the headset attached/detached to/from the mobile station; and
the controller is configured to control such that an output of noise to the headset, which is not completely separated from the mobile station, is blocked by turning off a microphone bias (160, 470) when the separation signal of the headset is received from the headset attachment/detachment detecting circuit unit.

2. The apparatus of claim 1, wherein when the headset is inserted into an ear jack (150, 460) of the mobile station, if the resistance value of the headset is received from the headset, a first voltage corresponding to the separation signal of the headset is changed to a second voltage, and the headset attachment/detachment detecting circuit unit transmits the insertion signal of the headset corresponding to the second voltage to the controller.

3. The apparatus of claim 2, wherein the headset attachment/detachment detecting circuit unit receives the resistance value of the headset from a terminal (L) first inserted when the headset is inserted into the ear jack of the mobile station among terminals installed in a plug (M, G, R, and L) of the headset.

4. The apparatus of claim 1, wherein when the headset is separated from the ear jack of the mobile station and thus the resistance value is not received from the headset, a second voltage corresponding to the insertion signal of the headset is changed to a first voltage, and the headset attachment/detachment detecting circuit unit transmits the separation signal of the headset corresponding to the first voltage to the controller.

5. The apparatus of claim 1, wherein when the insertion signal of the headset is received from the headset attachment/detachment detecting circuit unit, the controller controls such that an audio signal output from a codec (130) is transmitted to an earphone speaker (210, 220) of the headset and an audio signal received from an earphone microphone (230) of the headset is transmitted to the codec.

6. The apparatus of claim 1, wherein when the separation signal of the headset is received from the headset attachment/detachment detecting circuit unit, the controller controls such that an output of noise to the headset, which is not completely separated from the mobile station, is blocked by turning off the microphone bias and blocking a power supply to a microphone terminal installed in an ear jack of the mobile station.

7. An apparatus configured to detect an insertion of an headset (200) into a mobile (400), the apparatus comprising a headset insertion detecting circuit unit, a headset separation detecting circuit unit and a controller, wherein:
the headset insertion detecting circuit unit (410) is configured to transmit an insertion signal of the headset to the controller (450) by using a resistance value of the headset inserted into the mobile station;
the headset separation detecting circuit unit (430) is configured to transmit a separation signal of the headset to the controller when a voltage of a microphone bias in the mobile station is equal to or larger than a threshold; and
the controller is configured to control such that an output of noise to the headset, which is not completely separated from the mobile station, is blocked by turning off the microphone bias when the separation signal of the headset is received from the headset separation detecting circuit unit.

8. The apparatus of claim 7, further comprising an audio pass switching circuit unit (420) configured to transmit an audio signal output from a codec (440) to the headset by connecting the codec and an ear jack (460) of the mobile station, into which the headset is inserted, when an audio pass connection signal is received from the controller, and releasing connection between the codec and the ear jack when an audio pass disconnection signal is received from the controller.

9. The apparatus of claim 7, wherein when the headset is inserted into an ear jack (460) of the mobile station, if the resistance value of the headset is received from the headset, a first voltage corresponding to the separation signal of the headset is changed to a second voltage, and the headset insertion detecting circuit unit transmits the insertion signal of the headset corresponding to the second voltage to the controller.

10. The apparatus of claim 7, wherein the headset insertion detecting circuit unit receives the resistance value of the headset from a terminal (L) first inserted when the headset is inserted into an ear jack of the mobile station among terminals installed in a plug of the headset.

11. The apparatus of claim 7, wherein when the voltage of the microphone bias configured to supply power to a microphone terminal among terminals installed in an ear jack of the mobile station, into which a plug of the headset is inserted, is equal to or larger than the threshold, the headset separation detecting circuit unit transmits the separation signal of the headset to the controller,
wherein when the microphone terminal among the terminals installed in the plug of the headset is separated from the ear jack of the mobile station, the voltage of the microphone bias increases to a value equal to or larger than the threshold.

12. The apparatus of claim 7, wherein when the insertion signal of the headset is received from the headset insertion detecting circuit unit, the controller controls such that an audio signal output from a codec (440) is transmitted to an earphone speaker of the headset and an audio signal received from an earphone microphone of the headset is transmitted to the codec as an audio pass connection signal is transmitted to an audio pass switching circuit unit and thus the codec is connected to the headset.

13. The apparatus of claim 7, wherein when the separation signal of the headset is received from the headset separation detecting circuit unit, the controller controls such that an output of noise to the headset, which is not completely separated from the mobile station, is blocked by turning off the microphone bias and blocking a power supply to a microphone terminal installed in an ear jack.

14. The apparatus of claim 7, when the separation signal of the headset is received from the headset separation detecting circuit unit, the controller controls such that connection between a codec and the headset is released in an audio pass switching circuit unit by transmitting an audio pass disconnection signal to the audio pass switching circuit unit.

15. A method of detecting an insertion of an headset into a mobile station, the method comprising:
detecting an insertion signal or a separation signal of the headset by using a resistance value of the headset inserted into the mobile station; and
blocking an output of noise to the headset, which is not completely separated from the mobile station, by turning off a microphone bias when the separation signal of the headset is detected.

16. The method of claim 15, wherein the detecting of the insertion signal comprises :
receiving the resistance value of the headset from the headset by an insertion of the headset into an ear jack of the mobile station; and
when a first voltage corresponding to the separation signal of the headset is changed to a second voltage according to the resistance value of the headset, detecting the insertion signal of the headset corresponding to the output second voltage.

17. The method of claim 16, wherein the resistance value of the headset is received from a terminal (L) first inserted when the headset is inserted into the ear jack of the mobile station among terminals installed in a plug of the headset.

18. The method of claim 15, wherein the detecting of the separation signal comprises :
not receiving the resistance value from the headset by a separation of the headset from an ear jack of the mobile station; and
when a second voltage corresponding to the insertion signal of the headset is changed to a first voltage according to the non-reception of the resistance value of the headset, detecting the separation signal of the headset corresponding to the output first voltage.

19. The method of claim 15, further comprising, when the insertion signal of the headset is received, transmitting an audio signal output from a codec to an earphone speaker of the headset and transmitting an audio signal received from the earphone speaker of the headset to the codec.

20. The method of claim 15, wherein the blocking of the output of the noise comprises, when the separation signal of the headset is received, blocking the output of the noise to the headset, which is not completely separated from the mobile station, by turning off the microphone bias and blocking a power supply to a microphone terminal installed in an ear jack of the mobile station.

21. A method of detecting an insertion of an headset (200) into a mobile station(200), the method comprising:
when an insertion signal of the headset is detected by using a resistance value of the headset inserted into the mobile station, connecting a codec (440) and the headset; and
when a separation signal of the headset is detected by using a voltage of a microphone bias (470) in the mobile station, blocking an output of noise to the headset, which is not completely separated from the mobile station, by turning off the microphone bias.

22. The method of claim 21, wherein the detecting of the insertion signal comprises :
when the headset is inserted into an ear jack (460) of the mobile station, receiving the resistance value of the headset from the headset; and
when a first voltage corresponding to the separation signal of the headset is changed to a second voltage according to the resistance value of the headset, detecting the insertion signal of the headset corresponding to the output second voltage.

23. The method of claim 22, wherein the resistance value of the headset is received from a terminal (L) first inserted when the headset is inserted into the ear jack of the mobile station among terminals installed in a plug of the headset.

24. The method of claim 21, wherein the connecting of the codec and the headset comprises:
when the insertion signal of the headset is detected, connecting the codec and the headset; and
transmitting an audio signal output from the codec to an earphone speaker of the headset and transmitting an audio signal received from an earphone microphone to the codec.

25. The method of claim 21, wherein the detecting of the separation signal comprises :
determining whether the voltage of the microphone bias configured to supply power to a microphone terminal among terminals installed in an ear jack of the mobile station into which a plug of the headset is inserted is equal to or larger than a threshold; and
detecting the separation signal of the headset output when the voltage of the microphone bias is equal to or larger than the threshold,
wherein the voltage of the microphone bias increases to the threshold when the microphone terminal among the terminals installed in the plug of the headset is separated from the ear jack of the mobile station.

26. The method of claim 21, wherein the blocking of the output of the noise comprises, when the separation signal of the headset is received, blocking the output of the noise to the headset, which is not completely separated from the mobile station, by turning off the microphone bias and blocking a power supply to a microphone terminal installed in an ear jack of the mobile station.
